# EUROPÄISCHE PATENTSCHRIFT

(11) **EP 1 685 640 B1**
(45) Veröffentlichungstag und Bekanntmachung des Hinweises auf die Patenterteilung: **15.06.2011**
(21) Anmeldenummer: 04797939.8
(22) Anmeldetag: 17.11.2004
(51) Int. Cl.: H02K 13/10

(54) **KOMMUTATOR FÜR EINE ELEKTRISCHE MASCHINE**
COMMUTATOR FOR AN ELECTRIC MACHINE
COMMUTATEUR DE MACHINE ELECTRIQUE

(30) Priorität: 20.11.2003 DE 10354220
(43) Veröffentlichungstag der Anmeldung: 02.08.2006
(73) Patentinhaber: Kolektor Group d.o.o., 5280 Idrija (SI)
(72) Erfinder: KUMAR, Ludvik, 5281 Spodnja Idrija (SI); POTOCNIK, Joze, 5280 Idrija (SI)
(74) Vertreter: Grättinger Möhring von Poschinger Patentanwälte Partnerschaft
(86) Internationale Anmeldenummer: PCT/EP2004/013004
(87) Internationale Veröffentlichungsnummer: WO 2005/050820

(56) Entgegenhaltungen:
- US-B1- 6 285 106
- PATENT ABSTRACTS OF JAPAN Bd. 1997, Nr. 06, 30. Juni 1997 (1997-06-30) -& JP 09 051659 A (ASMO CO LTD), 18. Februar 1997 (1997-02-18)

## Beschreibung

Die vorliegende Erfindung betrifft einen Kommutator für eine elektrische Maschine, umfassend einen aus isolierender Preßmasse gefertigten Trägerkörper, eine Mehrzahl von an diesem gleichmäßig um die Kommutatorachse herum angeordneten metallischen Leitersegmenten mit daran angeordneten Anschlußelementen für eine Rotorwicklung und eine Entstöreinrichtung, mit welcher die Leitersegmente elektrisch leitend verbunden sind, wobei die Entstöreinrichtung eine der Anzahl der Leitersegmente entsprechende Anzahl einzelner, um die Kommutatorachse herum angeordneter Enstörelemente und eine ebenso große Anzahl von Kontaktbrücken, welche jeweils mit einem zugeordneten Leitersegment elektrisch leitend verbunden sind und zwei einander benachbarte Entstörelemente miteinander und mit dem zugeordneten Leitersegment elektrisch leitend verbinden, umfasst, wobei die Kontaktbrücken jeweils zwei einwärts gerichtete, in Umfangsrichtung zueinander nachgiebige, mit den beiden zugeordneten Entstörelementen elektrisch leitend verbundene Schenkel und einen auswärts gerichteten, mit dem zugeordneten Leitersegment elektrisch leitend verbundenen Fußabschnitt aufweisen.

Kommutatoren verschiedener Bauweisen (Trommelkommutatoren, Plankommutatoren) sind in vielfältigen Ausgestaltungen bekannt. Zunehmend werden Kommutatoren, insbesondere im Falle ihrer Ausführung als Trommelkommutator, dabei mit Einrichtungen zur Funkenunterdrückung (Entstöreinrichtungen) ausgerüstet, um eine Beeinträchtigung elektronischer Baugruppen, welche in räumlicher Nähe zu der betreffenden, mit dem Kommutator ausgerüsteten elektrischen Maschine angeordnet sind, durch Funkenbildung am Kommutator zu verhindern.

Solche Entstöreinrichtungen wurden bisher verbreitet als aus einem Material mit einem spannungsabhängigen Widerstand bestehende ringförmige Entstörscheiben ausgeführt, die mit den Leitersegmenten elektrisch leitend verbunden sind. Die entsprechende Entstörscheibe kann dabei einerseits radial außerhalb der Bürstenlauffläche (vgl. z.B. US 5895990 A, US 5717270 A, GB 2183933 A und US 5796203 A) oder andererseits radial innerhalb der Bürstenlauffläche angeordnet sein (vgl. z.B. US 6285106 B1 und DE 19953231 A1). Darüber hinaus bekannt sind Sonderformen von entstörten Trommelkommutatoren, bei denen die Leitersegmente außen auf zylindrischen Entstörhülsen angeordnet sind (vgl. DE 2055648 und DE 3614869 C2). Die EP 364292 B1 beschreibt schließlich einen Trommelkommutator mit einem aus thermoplastischem Material bestehenden Trägerkörper, bei dem radial unterhalb der Anschlußfahnen ein wärmebeständiger Verstärkungsring vorgesehen ist, der eine entstörende Beschichtung aufweisen oder benachbart zu dem ein separater Entstörring angeordnet sein kann; der Verstärkungsring ist dabei ebenso wie der ggf. ergänzend vorgesehene separate Entstörring auf einem Sitz des Trägerkörpers angeordnet, wo er durch von den Leitersegmenten vorspringende Laschen gehalten wird.

Unabhängig von der jeweiligen spezifischen Anordnung der Entstörscheibe sind bei sämtlichen Kommutatoren, deren Entstöreinrichtung eine ringförmige Entstörscheibe umfaßt, die erheblichen Kosten für die Entstöreinrichtung von Nachteil. Denn das Keramikmaterial, aus welchem derartige Entstörscheiben üblicherweise hergestellt werden, ist sehr teuer; und bei der Herstellung von ringförmigen Entstörscheiben, indem diese aus einer Multi-layer-Metall-Keramikplatte herausgeschnitten werden, fallen große Mengen an Abfall an.

Im übrigen kommen von den bekannten, unter Verwendung einer Entstörscheibe entstörten Trommelkommutatoren für viele praktische Anwendungen wegen der Beschränkung des für den jeweiligen Kommutator zur Verfügung stehenden Raumes nur kompakte Trommelkommutatoren mit radial innerhalb der Bürstenlauffläche angeordneten Entstörscheiben in Betracht. Ein weiteres Problem derartiger Trommelkommutatoren mit radial innerhalb der Bürstenlauffläche angeordneten Entstörringen resultiert aus dem unterschiedlichen Wärmedehnverhalten der üblicherweise aus keramischem Material bestehenden Entstörscheibe verglichen mit den übrigen Komponenten betreffender Kommutatoren. Entsprechende Wärmespannungen können nämlich, sofern nicht besondere Vorkehrungen getroffen werden, zum vorzeitigen Ausfall von Kommutatoren infolge gebrochener Entstörscheiben und/oder zerstörter Verbindungen der Leitersegmente mit den Entstörscheiben führen. Zur Lösung dieses Problems wird in der DE 19953231 A1 vorgeschlagen, die Entstörscheibe mit einem elastischen Klebstoff mit dem Trägerkörper zu verbinden und die Leitersegmente an die Entstörscheibe über dünne Drähte anzuschließen, welche einerseits an der Anschlußfahne des zugeordneten Leitersegments und andererseits an einer zugeordneten Metallisierungszone der Entstörscheibe angelötet werden. Nach der US 6285106 B1, welche einen Trommelkommutator der gattungsgemäßen Art offenbart, sind demgegenüber zur elektrischen Kontaktierung der Leitersegmente mit der Entstörscheibe Blechfedern vorgesehen, welche innerhalb eines ringförmigen Hohlraums angeordnet sind, welcher durch den Trägerkörper, die Leitersegmente und einen ringförmigen Deckel begrenzt wird und in dem auch die Entstörscheibe aufgenommen ist. Die Blechfedern, die eine unterschiedliche radiale Wärmedämmung der Entstörscheibe einerseits und der übrigen Kommutatorbauteile andererseits zulassen, können dabei insbesondere an dem ringförmigen Deckel befestigt sein.

Besonders nachteilig bei den beiden bekannten, vorstehend gewürdigten Trommelkommutatoren mit einer jeweils radial innerhalb der Leitersegmente angeordneten Entstörscheibe ist insbesondere der hohe, der Konkurrenzfähigkeit der entsprechenden Trommelkommutatoren entgegenstehende Herstellungsaufwand, der maßgeblich durch die hohen Herstellkosten für die Entstörscheibe (s.o.) begründet ist.

Ein als Trommelkommutator ausgeführter Kommutator der eingangs angegebenen Art mit einzelnen Entstörelementen ist aus der JP 9-51659 A bekannt. Die Entstörelemente sind in einem mit dem Trägerkörper fest verbundenen ringförmigen Träger dergestalt aufgenommen, daß sie sich radial außerhalb der außen an dem Trägerkörper anliegenden Leitersegmente befinden, und zwar jeweils auf Lücke zwischen zwei Leitersegmenten. Zwischen jeweils zwei einander benachbarten Entstörelementen erstreckt sich eine streifenförmige federnde Kontaktbrücke. Der betreffende Streifen liegt mit seinen beiden Endabschnitten stirnseitig an den beiden betreffenden Entstörelementen an, zu welchem Zweck die besagten Endabschnitte bevorzugt dergestalt abgetainkelt ausgeführt sind, daß eine flächige Anlage gewährleistet ist. Mittig liegt der betreffende Streifen demgegenüber flächig an der Außenfläche des zugeordneten, zwischen den beiden Entstörelementen angeordneten Leitersegments an.

Auch diesem bekannten Kommutator haftet der Nachteil unerwünscht großer Abmessungen an.

Die der vorliegenden Erfindung zugrundeliegende Aufgabenstellung besteht in Anschauung des vorstehend gewürdigten Standes der Technik darin, einen langlebigen, zuverlässigen entstörten Kommutator der gattungsgemäßen Art bereitzustellen, der sich bei seiner Eignung zur Großserienherstellung mit einem geringen Herstellungsaufwand zu niedrigen Kosten fertigen läßt, wobei besonders bevorzugt möglich sein soll, einen entstörten Kommutator mit im wesentlichen denselben Abmessungen wie einem nichtentstörten Kommutator gleicher Auslegung herzustellen.

Gelöst wird diese Aufgabenstellung gemäß der vorliegenden Erfindung dadurch, daß die Kontaktbrücken im Bereich ihrer Schenkel mit den zugeordneten Entstörelementen und im Bereich ihrer Fußabschnitte mit den zugeordneten Leitersegmenten verlötet oder verklebt sind.

Ein erstes charakteristisches Merkmale für den Kommutator nach der vorliegenden Erfindung ist somit, daß die Entstöreinrichtung nicht eine ringförmige Entstörscheibe umfaßt, sondern vielmehr eine der Anzahl der Leitersegmente entsprechende Anzahl einzelner Entstörelemente; solche einzelnen Entstörelemente, die als Multilayer-Kondensatoren insbesondere eine quaderförmige Form aufweisen können, lassen sich aus einer Multi-layer-Metall-Keramikplatte ohne nennenswerten Verschnitt und somit besonders kostengünstig herstellen. Ferner ist für den erfindungsgemäßen Kommutator charakteristisch, daß jeweils zwei einander benachbarte Entstörelemente über jeweils eine Kontaktbrücke miteinander elektrisch verbunden sind, wobei die beiden Schenkel, an denen die betreffende Kontaktbrücke mit den beiden Entstörelementen elektrisch leitend verbunden ist, in umfangsrichtung zueinander nachgiebig ausgeführt sind. In diesem Sinne bedeutet "nachgiebig", daß die zur verformung der Kontaktbrücken in Umfangsrichtung erforderliche Kraft geringer ist als die Festigkeit der Verbindungen der Kontaktbrücken mit den Entstörelementen. Die den erfindungsgemäßen Kommutator kennzeichnende Enststöreinrichtung setzt sich auf diese Weise aus einzelnen Entstörelementen und Kontaktbrücken zusammen, welche in alternierender Reihenfolge zur Bildung einer Ringstruktur zusammengefügt sind. Die Nachgiebigkeit der Kontaktbrücken bewirkt dabei, daß die betreffende Ringstruktur nicht starr ist; vielmehr ist die Ringstruktur als ganzes im Umfangsrichtung nachgiebig, so daß sie wärmedehnungsbedingte Veränderungen der Dimensionen des Kommutators kompensieren kann. Die Herstellung der Kontaktbrücken als separate Bauteile ermöglicht dabei, diese - weitgehend ohne Beschränkung - gezielt auf die beschriebene Funktion abzustimmen, indem Materialwahl und Dimensionen im Hinblick auf die Nachgiebigkeit und die Festigkeit der Ringstruktur der Entstöreinrichtung sowie die Verbindung der Kontaktbrükken mit den Entstörelementen optimiert werden.

Die Verformbarkeit der Kontaktbrücken in ihrer Einbausituation ergibt sich einerseits aus deren nachgiebiger Ausführung und andererseits daraus, daß die Schenkel der Kontaktbrücken freiliegen, d.h. sich im Rahmen des üblichen Wärmedehnungsverhaltens des Kommutators verformen können, ohne durch angrenzende Bauteile des Kommutators behindert zu werden.

Erfindungsgemäß werden die Kontaktbrücken mittels einfacher Lötverbindungen oder auch elektrisch leitender Klebeverbindungen im Bereich der Kontaktpunkte dauerhaft mit den Entstörelementen verbunden. Entsprechendes gilt für die Verbindung der Kontaktbrücken mit den Leitersegmenten jeweils im Bereich des das betreffende Leitersegmenten kontaktierenden Fußabschnitts. Als günstig kann sich in diesem Zusammenhang eine geeignete Metallisierung (z.B. Beschichtung aus Silber oder Zinn) der Entstörelemente im Bereich ihrer Kontaktpole und/oder der Kontaktbrücken im Bereich der Schenkel erweisen; auch die Herstellung der Kontaktbrücken aus Kupfer, Messing oder einer diese Metalle enthaltenden Legierung ist in diesem Zusammenhang günstig. Solche dauerhaften Verbindungen der Kontaktbrücken mit den Entstörelementen und/oder den Leitersegmenten, die, ebenso wie die Entstörelemente selbst, durch die in Umfangsrichtung nachgiebige Ausführung der Kontaktbrücken nur geringen mechanischen Belastungen unterworfen sind, erweisen sich als besonders vorteilhaft, wenn der erfindungsgemäße Kommutator in einer korrosiven Umgebung eingesetzt wird.

Im Rahmen der vorliegenden Erfindung ist wesentlich, daß die "elektrisch leitenden Verbindungen" der Kontaktbrücken mit den Kontaktpolen bzw. Kontaktflächen der jeweils zwei benachbarten Entstörelemente auch zur Übertragung mechanischer Kräfte geeignet sind. Die direkte und unmittelbare Kontaktierung der Kontaktbrücken mit den Entstörelementen, ohne daß dies nachteilige Auswirkungen auf die Lebensdauer des Kommutators hat, wird dabei dadurch ermöglicht, daß sich die Kontaktbrücken zum Ausgleich unterschiedlicher Wärmedehnungsverhalten der einzelnen Kommutatorbauteile verformen können.

Ersichtlich lassen sich somit in Anwendung der vorliegenden Erfindung aufgrund der Kombinationen der für erfindungsgemäße Kommutatoren charakteristischen Merkmale mit minimalem Fertigungsaufwand äußerst preisgünstige, langlebige und kompakte entstörte Kommutatoren herstellen. Anwendbar ist die vorliegende Erfindung dabei für verschiedene Kommutatorbauweisen, und zwar unabhängig von der Ausführung der Bürstenlauffläche. Mit besonderem Vorteil lassen sich Kommutatoren mit Kohlenstofflauffläche, wie sie zum Antrieb von Kraftstoffpumpen für Kraftfahrzeuge eingesetzt werden, gemäß der vorliegenden Erfindung ausführen.

Gemäß einer anderen bevorzugten Weiterbildung des erfindungsgemäßen Kommutators sind die Entstörelemente als quaderförmige Multilayer-Kondensatoren ausgeführt und entlang der Kanten eines gleichseitigen Vielecks um die Kommutatorachse herum angeordnet, und zwar zweckmäßigerweise jeweils auf Lücke zwischen zwei einander benachbarten Leitersegmenten. Dies begünstigt insbesondere eine verfahrensmäßig einfache und somit kostengünstige Herstellung des erfindungsgemäßen Kommutators.

Was die konstruktive Ausführung der Kontaktbrücken angeht so besteht hierfür im Rahmen der vorliegenden Erfindung ein erheblicher Spielraum, der insbesondere in Abhängigkeit von der Kommutatorenbauart, den Abmessungen und den spezifischen Anforderungen genutzt werden kann. Eine insoweit erste bevorzugte Ausführungsform der Erfindung zeichnet sich dadurch aus, daß die Kontaktbrücken jeweils räumlich zwischen zwei einander benachbarten Entstörelementen angeordnet und mit den zugeordneten Entstörelementen im Bereich von stirnseitigen Kontaktflächen verbunden sind. Dabei können die Kontaktbrücken insbesondere jeweils aus einem gebogenen metallischen Streifen bestehen, wobei man die Grundform der Kontaktbrücken dabei als im wesentlich V-förmig beschreiben kann.

Gemäß einer anderen bevorzugten Weiterbildung der Erfindung ist vorgesehen, daß die Kontaktbrücken in einer zu den Entstörelementen axial versetzten Ebene angeordnet und mit den zugeordneten Entstörelementen im Bereich von seitlich angeordneten Kontaktflächen verbunden sind. In diesem Falle können die Kontaktbrükken, die hinsichtlich ihrer Form insbesondere an ein Hufeisen mit einem daran angesetzten Fußabschnitt erinnern können, aus einem ebenen metallischen Flachmaterial (z.B. Blech) bestehen, was sich als kostenmäßig besonders günstig erweist. Auch hat eine solche Ausführung der Kontaktbrücken vorteilhafte Auswirkungen auf die Herstellungsweise von Kommutatoren nach der vorliegenden Erfindung.

Während sich das der vorliegenden Erfindung zugrundeliegende Konzept mit Vorteil bei Kommutatoren verschiedener Bauweisen (Trommelkommutatoren, Plankommutatoren) und unterschiedlich ausgeführter Bürstenlaufflächen (z.B. direkt auf metallischen Leitersegmenten oder mit Kohlenstofflauffläche) umsetzen läßt, sind im Falle der Ausführung des Kommutators als Trommelkommutator mit einer zylindrischen Bürstenlauffläche die durch die vorliegende Erfindung erzielbaren Vorzüge besonders ausgeprägt. Denn die Erfindung gestattet, nachdem sich die Bürstenlauffläche in axialer Richtung über die Entstöreinrichtung hinaus erstrecken kann, eine besonders kompakte Bauweise.

Im Hinblick auf die Ausführung der Anschlußelemente zeichnet sich eine wiederum andere bevorzugte Weiterbildung der Erfindung dadurch aus, daß die Anschlußelemente als Anschlußfahnen ausgeführt sind, die im Falle der Ausführung des Kommutators als Trommelkommutator im Bereich der der Entstöreinrichtung gegenüberliegenden Stirnseite des Kommutators angeordnet sind. In diesem Falle ist das Risiko einer Beschädigung der Verbindungen der Kontaktbrücken mit den Leitersegmenten sowie den Entstörelementen während des Anschweißens der Rotorwicklung an die Anschlußfahnen minimal.

Zur Sicherung ihrer Lage - auch während der Montage - sind die Entstörelemente besonders bevorzugt jeweils in eine axial in den Trägerkörper eingesenkte Aufnahme des Trägerkörpers eingesetzt. Die Begrenzungswände einer derartigen Aufnahme stehen dabei zur Abstützung des betreffenden Entstörelements in radialer Richtung, in Umfangsrichtung sowie in axialer Richtung den radialen Innen- und Außenflächen, den beiden Stirnflächen und einer Seitenfläche des Entstörelements gegenüber. Die Aufnahmen werden dabei besonders bevorzugt radial innen und in Umfangsrichtung jeweils durch einen Rippenring und radial außen durch Preßmassevorsprünge des Trägerkörpers begrenzt.

Hinzuweisen ist in diesem Zusammenhang darauf, daß jedenfalls im Falle der weiter oben erläuterten Anordnung der Kontaktbrücken jeweils räumlich zwischen zwei einander benachbarten Entstörelementen die einzelnen Aufnahmen für die Entstörelemente untereinander durch Einbauräume für die Kontaktbrücken verbunden sind, wobei die Gestaltung der Einbauräume auf die Form der Kontaktbrücken abgestimmt ist. Dies ist nicht zwingend erforderlich, wohl aber vorteilhaft, wenn die Kontaktbrücken, wie dies ebenfalls weiter oben erläutert ist, in einer zu den Entstörelementen axial versetzten Ebene angeordnet und mit den zugeordneten Entstörelementen im Bereich von seitlich, d.h. axial angeordneten Kontaktflächen verbunden sind.

Was die Herstellung von Kommutatoren nach der vorliegenden Erfindung angeht, so baut diese auf den als solches bekannten und in der einschlägigen Industrie eingesetzten Verfahren zur Herstellung von einen Trägerkörper und in diesen eingebettete Leitersegmente aufweisenden Kommutatorrohlingen auf. In diesem Umfang knüpft die Erfindung an dem hinreichend bekannten Stand der Technik an, so daß es insoweit keiner Erläuterungen bedarf. Abweichend von den bisher angewandten, der Herstellung bekannter Kommutatoren dienenden Verfahren werden allerdings zweckmäßigerweise bei der Herstellung des Trägerkörpers in diesem stirnseitig angeordnete Aufnahmen für die Enstörelemente und ggfs. diese Aufnahmen miteinander verbindende Einbauräume für die Kontaktbrücken eingeformt. In der Regel erfolgt die sich anschließende Montage der einzelnen Entstörelemente und der ebensovielen Kontaktbrücken in zwei gesonderten aufeinanderfolgenden Schritten. In diesem Sinne werden im Laufe des weiteren Herstellungsprozesses zunächst die vorgefertigten Enstörelemente in die besagten Aufnahmen eingesetzt; im Anschluß daran werden sodann die vorgefertigten Kontaktbrücken dergestalt angebracht, daß sie jeweils zwei einander benachbarte Entstörelemente und ein Leitersegment elektrisch leitend verbinden. Die Kontaktbrücken können hierzu im Bereich ihrer Schenkel mit den beiden jeweils zugeordneten Entstörelementen und im Bereich des Fußabschnitts mit dem jeweils zugeordneten Leitersegment verlötet oder verklebt werden.

Günstig ist es dabei, wenn auf die Kontaktbrücken, bevor sie angebracht werden, im Bereich ihrer späteren elektrisch leitenden Verbindungen mit den Entstörelementen und den Leitersegmenten Lötmittel oder Klebstoff aufgetragen wird.

Werden, wie dies weiter oben erläutert wurde, die Kontaktbrücken durch Ausstanzen aus einem ebenen Blechstreifen hergestellt, so entspricht deren Konfiguration während des Ausstanzens bevorzugt ihrer Konfiguration in dem herzustellenden Kommutator. Die Kontaktbrücken werden dabei nach ihrem Ausstanzen aus dem Blechstreifen wieder in diesen eingepreßt, so daß der Blechstreifen eine Montagehilfe für die Kontaktbrücken bildet. Sämtliche Kontaktbrücken werden an dem Kommutatorrohling, nachdem die Entstörelemente in die Aufnahmen eingesetzt worden sind, gemeinsam duch Auspressen aus dem Blechstreifen in die Einbauräume, sofern solche vorgesehen sind, hinein montiert. Bei dieser Verfahrensweise wird Lötmittel bzw. Klebstoff, soefrn solches zum Einsatz kommt, bevorzugt auf die Kontaktbrücken aufgetragen, nachdem diese wieder in den Blechstreifen eingepreßt wurden.

Im folgenden wird die vorliegende Erfindung anhand dreier in der Zeichnung veranschaulichter bevorzugter Ausführungsbeispiele näher erläutert. Dabei zeigt
- Fig. 1: einen Axialschnitt durch eine erste Ausfüh- rungsform eines nach der vorliegenden Erfin- dung ausgeführten Trommelkommutators,
- Fig. 2: eine stirnseitige Draufsicht auf den Trommel- kommutator nach Fig. 1,
- Fig. 3: in vergrößerter perspektivischer Ansicht ei- nen Ausschnitt der in Fig. 1 gezeigten Stirn- seite des Trommelkommutators nach den Fig. 1 und 2,
- Fig. 4: einen Axialschnitt durch eine zweite Ausfüh- rungsform eines nach der vorliegenden Erfin- dung ausgeführten Trommelkommutators,
- Fig. 5: eine stirnseitige Draufsicht auf den Trommel- kommutator nach Fig. 4,
- Fig. 6: in vergrößerter perspektivischer Ansicht ei- nen Ausschnitt der in Fig. 4 gezeigten Stirn- seite des Trommelkommutators nach den Fig. 4 und 5 und
- Fig. 7: in perspektivischer Ansicht einen nach der vorliegenden Erfindung ausgeführten Plankom- mutator mit Kohlenstofflauffläche.

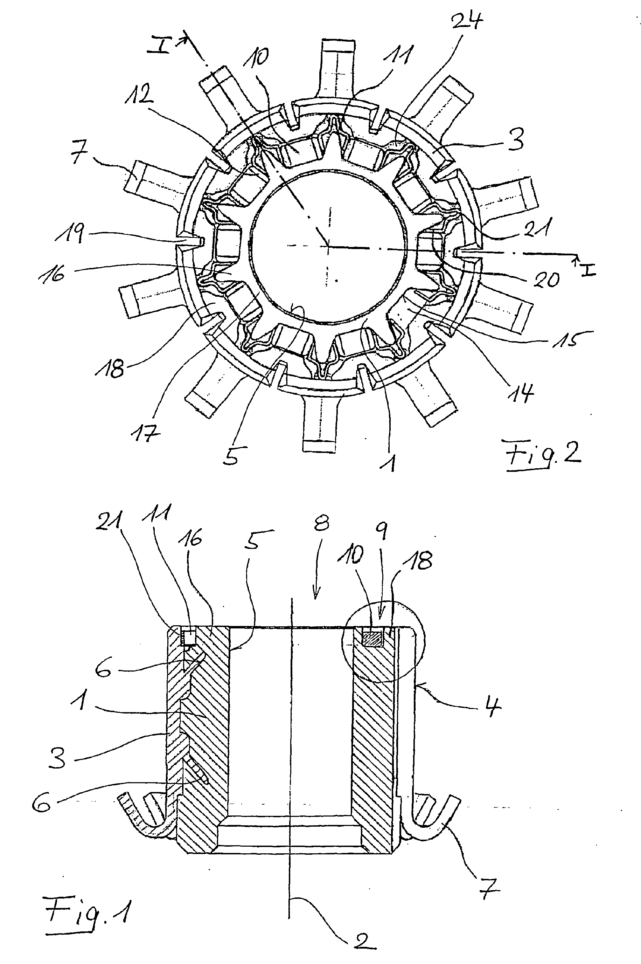

Der in den Figuren 1 bis 3 dargestellte Trommelkommutator umfaßt als wesentliche Bauteile einen aus isolierender Preßmasse hergestellten Trägerkörper 1 und zehn gleichmäßig um die Kommutatorachse 2 herum angeordnete Leitersegmente 3, deren zylindrische Umfangsflächen die Bürstenlauffläche 4 definieren. Der Trägerkörper 1 weist eine zur Achse 2 konzentrische Bohrung 5 auf, welche der Anordnung des Kommutators auf einer - nicht gezeigten - Rotorwelle dient.

Ankerteile 6 der Leitersegmente 3 sind in die Preßmasse des Trägerkörpers 1 eingebettet, um die Leitersegmente auch bei hohen Drehzahlen trotz der dann herrschenden Fliehkräfte sicher zu verankern. Endseitig sind an den Leitersegmenten 3 Anschlußfahnen 7 vorgesehen, die, in als solches bekannter Weise, dem Anschluß von Wicklungsdrähten an den Kommutator dienen.

In dem vorstehend dargelegten Umfang entspricht der Kommutator nach den Fig. 1 bis 3 dem hinlänglich bekannten Stand der Technik, so daß es zu seinem Verständnis weiterer Erläuterungen nicht bedarf.

Im Bereich der den Anschlußfahnen 7 gegenüberliegenden Stirnseite 8 weist der Kommutator eine Entstöreinrichtung 9 auf. Diese umfaßt zehn einzelne, gleichförmig um die Kommutatorachse 2 herum angeordnete, quaderförmige Entstörelemente 10 aus keramischem Material sowie zehn Kontaktbrücken 11. Die Entstörelemente 10 sind dabei auf Lücke zu den Leitersegmenten 3 angeordnet. Sie weisen jeweils eine Kondensatorfunktion auf und verfügen jeweils an zwei einander - im Hinblick auf die Einbaulage im Kommutator in Umfangsrichtung - gegenüberliegenden Stirnflächen über metallisierte Schichten 12, welche die Kontaktpole 13 des betreffenden Entstörelements darstellen. Jedes Entstörelement 10 ist in einer taschenförmigen Aufnahme 14 des Trägerkörpers 1 aufgenommen. Radial innen und in Umfangsrichtung werden jene Aufnahmen 14 durch eine Umfangsfläche 15 bzw. zwei Rippen 16 eines Rippenringes 17 begrenzt, der Teil des Trägerkörpers 1 ist; radial außen begrenzt jeweils ein Preßmassevorsprung 18 des Trägerkörpers 1 die Aufnahmen 14 für die Entstörelemente 10. An jedem Preßmassevorsprung 18 liegen außen zwei Leitersegmente 3 an; die Luftspalte 19, welche jeweils zwei benachbarte Leitersegmente 3 gegeneinander isolieren, erstrecken sich in die Preßmassevorsprünge 18 hinein.

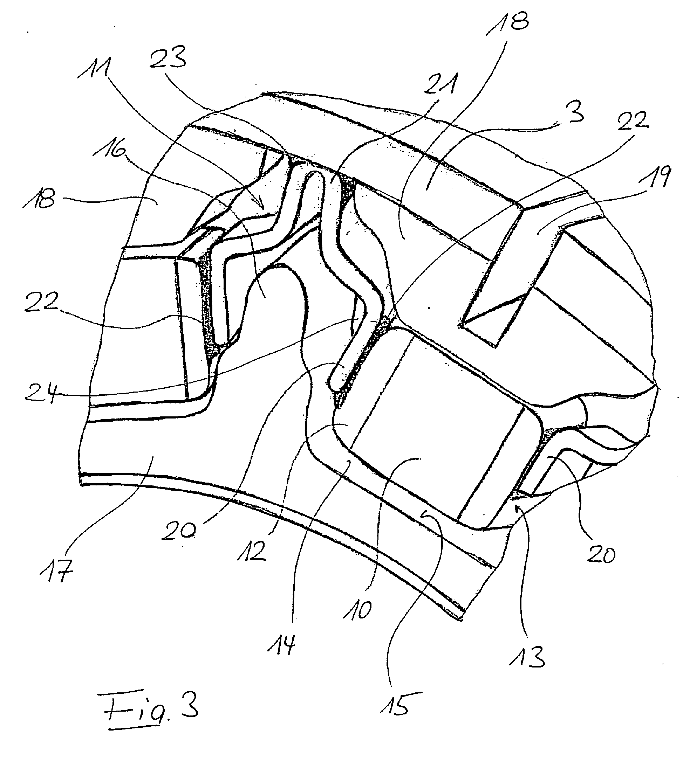

Die Kontaktbrücken 11 sind jeweils räumlich zwischen zwei einander benachbarten Entstörelementen 10 angeordnet und mit den zugeordneten Entstörelementen im Bereich der stirnseitigen Kontaktpole 13 verbunden. Sie bestehen jeweils aus einem metallischen Streifen, der zur Bildung von zwei Schenkeln 20 und ein Fußabschnitt 21 mehrfach gebogenen ist (Fig. 3). In diesem Sinne kann man die Grundform der Kontaktbrücken als im wesentlich V-förmig beschreiben. Aufgrund der mehrfachen Biegung der Kontaktbrücken 11 können einerseits die Schenkel 21 großflächig an den Kontaktpolen 13 der quaderförmigen Entstörelemente 10 anliegen, und andererseits ergibt sich eine elastische Nachgiebigkeit der Kontaktbrücken sowohl in Umfangsrichtung als auch in radialer Richtung. Die Kontaktbrücken 11 sind im Bereich der Schenkel 20 über jeweils eine Lötverbindung 22 mit den Entstörelementen 10 und im Bereich des Fußabschnitts 21 über eine Lötverbindung 23 _mit dem jeweils zugeordneten Leitersegment 3 an dessen radialer Innenseite fest verbunden. Die Aufnahmen 14 für die Entstörelemente 10 sind untereinander durch Einbauräume 24 für die Kontaktbrücken 11 verbunden, welche so gestaltet sind, daß sie die freie Verformung der Kontaktbrücken 11 nicht behindern.

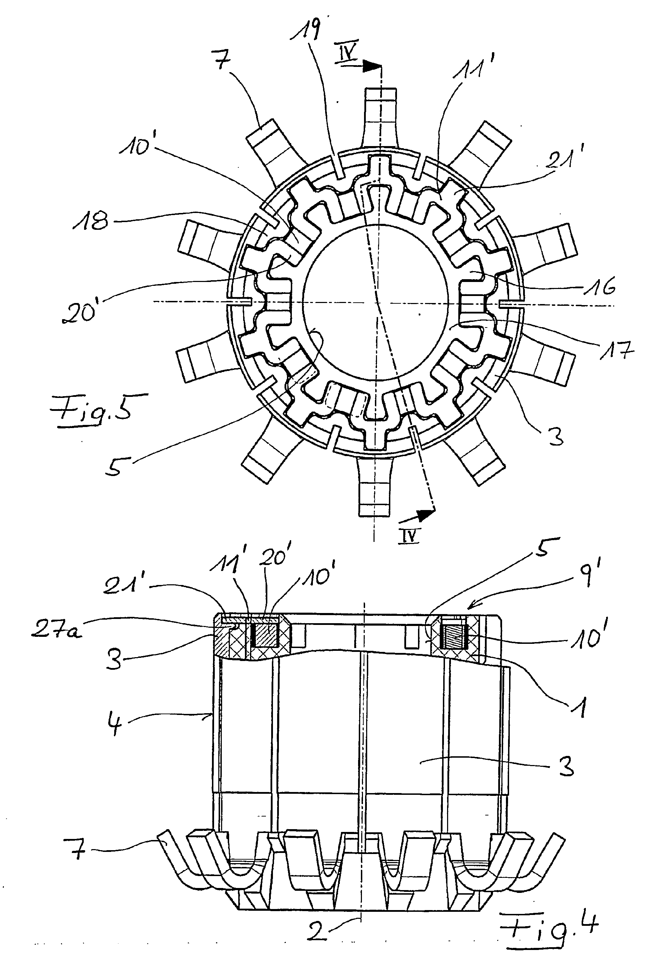

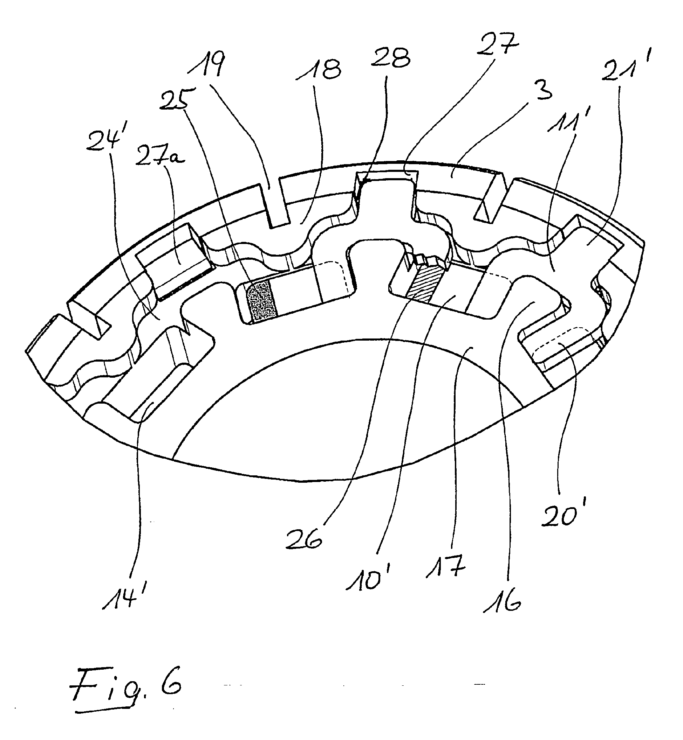

Die in den Fig. 4 bis 6 veranschaulichte zweite Ausführungsform des erfindungsgemäßen Kommutators entspricht hinsichtlich wesentlicher Gestaltungsmerkmale der Ausführungsform nach den Figuren 1 bis 3. Zur Vermeidung von Wiederholungen wird auf die vorstehenden Erläuterungen verwiesen.

Maßgeblich anders gestaltet als im Falle des Kommutators nach den Fig. 1 bis 3 ist bei dem Kommutator nach den Fig. 4 bis 6 allerdings die Entstöreinrichtung 9'. Hier bestehen die Kontaktbrücken 11' aus einem ebenen metallischen Flachmaterial; die Form der Kontaktbrücken 11' entspricht etwa der eines die beiden Schenkel 20' bildenden Hufeisens mit einem daran im Scheitel angesetzten Fußabschnitt 21'. Die Kontaktbrücken 11' sind in einer zu den quaderförmigen Entstörelementen 10' axial versetzten Ebene angeordnet, wobei ihre Schenkel 20' an den Entstörelementen 10' jeweils im Bereich von seitlich an diesen, d.h. in einer Axialebene des Kommutators angeordneten, metallisierten Kontaktflächen 25 anliegen. Dort sind die Kontaktbrücken 11' mit den Entstörelementen 10' über Lötverbindungen 26 fest verbunden. Die Leitersegmente 3 weisen jeweils auf ihrer Innenseite eine nutenförmige Vertiefung 27 auf, in welche die zugeordnete Kontaktbrücke 11' mit ihrem Fußabschnitt 21' eingreift. Am inneren Ende der Vertiefung 27 ist eine Auflage 27a für die zugeordnete Kontaktbrücke 11' gebildet. Mittels einer Lötverbindung 28 sind jeweils Kontaktbrücke 11' und Leitersegment 3 fest miteinander verbunden.

Auch bei dieser Ausführungsform sind die Aufnahmen 14' für die Entstörelemente 10' über Einbauräume 24' für die Kontaktbrücken 11' miteinander verbunden, wobei die Einbauräume 24' für die Kontaktbrücken aufgrund der axialen Staffelung von Entstörelementen 10' und Kontaktbrücken 11' eine geringere Tiefe aufweisen als die Aufnahmen 14' für die Entstörelemente 10'.

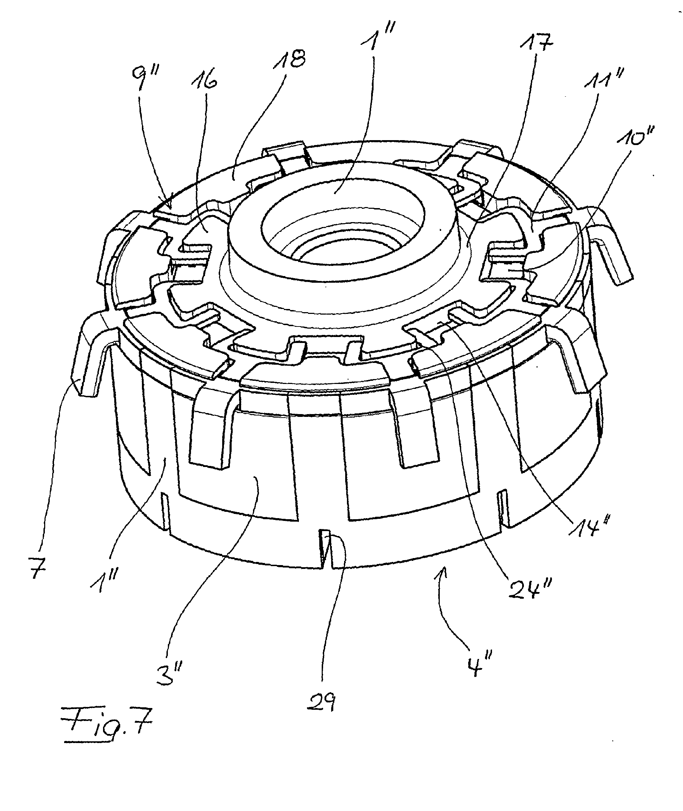

Aus den zeichnerisch dargestellten und vorstehend erläuterten, jeweils einen Trommelkommutator betreffenden Ausführungsbeispielen lassen sich ohne weiteres auch zweckmäßige Gestaltungen von erfindungsgemäß ausgeführten Plankommutatoren herleiten. Ein Asusführungsbeispiel für einen solchen ist in Fig. 7 veranschaulicht. Der Plankooutator umfaßt dabei, in als solches bekannter Weise, einen aus Preßmasse geformten Trägerkörper 1" und acht darin eingebettete Leitersegmente 3". Mit jedem Leitersegment 3" ist ein Kohlenstoffsegment 29 elektrisch leitend verbunden, wobei die Stirnflächen der Kohlenstoffsegmente die Bürstenlauffläche 4" definieren. Die Anschlußfahnen 7" sind an den Leitersegmenten 3" auf der der Bürstenlauffläche 4" gegenüberliegenden Seite des Kommutators angeordnet.

Ebenfalls an seiner der Bürstenlauffläche 4" gegenüberliegenden Seite weist der Kommutator eine Entstöreinrichtung 9" auf. Diese umfaßt acht im wesentlichen quaderförmige Entstörelemente 10" und acht Kontaktbrükken 11", welche jeweils mit den beiden benachbarten Entstörelementen 10" sowie dem zugeordneten Leitersegment 3" elektrisch leitend verbunden sind. Die Entstörelemente 10" sind in entsprechende Aufnahmen 14", welche in den Trägerkörper 1" eingeformt sind, eingesetzt. Die Kontaktbrücken 11" sind in Einbauräume 24" eingesetzt, welche jeweils zwei benachbarte Aufnahmen 14" miteinander verbinden, allerdings gegenüber den Aufnahmen 14" eine um die Dicke der Entstörelemente 10" reduzierte Tiefe aufweisen. Auch im übrigen ist die bei dem in Fig. 7 gezeigten Plankommutator realisierte Entstöreinrichtung 9" entsprechend zu der Entstöreinrichtung des Trommelkommtators nach den Fig. 4 bis 6 aufgebaut. Zur Vermeidung von Wiederholungen wird auf die jenen Kommutator betreffenden Erläuterungen verwiesen. Dies gilt auch, was die Herstellung des Kommutators angeht.

## Patentansprüche

1. Kommutator für eine elektrische Maschine, umfassend einen aus isolierender Preßmasse gefertigten Trägerkörper (1, 1"), eine Mehrzahl von an diesem gleichmäßig um die Kommutatorachse (2) herum angeordneten metallischen Leitersegmenten (3, 3") mit daran angeordneten Anschlußelementen für eine Rotorwicklung und eine Entstöreinrichtung (9, 9', 9"), mit welcher die Leitersegmente (3, 3") elektrisch leitend verbunden sind, wobei die Entstöreinrichtung (9, 9', 9") eine der Anzahl der Leitersegmenten (3, 3") entsprechende Anzahl einzelner, um die Kommutatorachse (2) herum angeordneter Enstörelemente (10, 10', 10") und eine ebenso große Anzahl von Kontaktbrücken (11, 11', 11"), welche jeweils mit einem zugeordneten Leitersegment elektrisch leitend verbunden sind und zwei einander benachbarte Entstärelemente (10, 10', 10") miteinander und mit dem zugeordneten Leitersegment elektrisch leitend verbinden, umfaßt, wobei die Kontaktbrücken (11, 11', 11") jeweils zwei einwärts gerichtete, in Umfangsrichtung zueinander nachgiebige, mit den beiden zugeordneten Entstörelementen elektrisch leitend verbundene Schenkel (20, 20') und einen auswärts gerichteten, mit dem zugeordneten Leitersegment elektrisch leitend verbundenen Fußabschnitt (21, 21') aufweisen,
**dadurch gekennzeichnet,**
**daß** die Kontaktbrücken (11, 11', 11") im Bereich ihrer Schenkel (20, 20') mit den zugeordneten Entstörelementen (10, 10', 10") und im Bereich ihrer Fußabschnitte (27, 21', 21") mit den zugeordneten Leitersegmenten (3, 3") verlötet oder verklebt sind.

2. Kommutator nach Anspruch 1,
**dadurch gekennzeichnet,**
**daß** die Entstörelemente (10, 10', 10") als quaderförmige Multilayer-Kondensatoren ausgeführt sind.

3. Kommutator nach Anspruch 1 oder Anspruch 2,
**dadurch gekennzeichnet,**
**daß** die Entstörelemente (10, 10', 10") gleich distanziert entlang den Kanten eines gleichseitigen Vielecks um die Kommutatorachse (2) herum angeordnet sind.

4. Kommutator nach einem der Ansprüche 1 bis 3,
**dadurch gekennzeichnet,**
**daß** jedes Entstörelement (10, 10', 10") in eine Aufnahme (14, 14', 14") des Trägerkörpers (1, 1") eingesetzt ist, die die Lage des betreffenden Entstörelements in radialer Richtung und in Umfangsrichtung definiert.

5. Kommutator nach Anspruch 4,
**dadurch gekennzeichnet,**
**daß** die Aufnahmen (14, 14', 14") radial innen und in Umfangsrichtung jeweils durch einen Rippenring (17, 17") und radial außen durch Preßmassevorsprünge (18, 18") des Trägerkörpers (1, 1") begrenzt sind.

6. Kommutator nach Anspruch 4 oder Anspruch 5,
**dadurch gekennzeichnet,**
**daß** die Aufnahmen (14, 14', 14") für die Entstörelemente (10, 10', 10") über Einbauräume (24, 24', 24") für die Kontaktbrücken (11, 11', 11") miteinander verbunden sind.

7. Kommutator nach einem der Ansprüche 1 bis 6,
**dadurch gekennzeichnet,**
**daß** die Kontaktbrücken (11) jeweils räumlich zwischen zwei einander benachbarten Entstörelementen (10) angeordnet und mit den zugeordneten Entstörelementen im Bereich von stirnseitigen Kontaktpolen (13) verbunden sind.

8. Kommutator nach Anspruch 7,
**dadurch gekennzeichnet,**
**daß** die Kontaktbrücken (11) aus einem gebogenen metallischen Streifen bestehen.

9. Kommutator nach einem der Ansprüche 1 bis 6,
**dadurch gekennzeichnet,**
**daß** die Kontaktbrücken (11', 11") in einer zu den Entstörelementen (10', 10") axial versetzten Ebene angeordnet und mit den zugeordneten Entstörelementen im Bereich von seitlich angeordneten Kontaktflächen (25) verbunden sind.

10. Kommutator nach Anspruch 9,
**dadurch gekennzeichnet,**
**daß** die Kontaktbrücken (11', 11") im wesentlichen hufeisenförmig ausgeführt sind und aus einem ebenen metallischen Flachmaterial bestehen, insbesondere indem sie aus einem Blech ausgestanzt sind.

11. Kommutator einem der Ansprüche 1 bis 10,
**dadurch gekennzeichnet,**
**daß** die Kontaktbrücken (11, 11', 11") aus Kupfer, Messing oder einer diese Metalle enthaltenden Legierung bestehen.

12. Kommutator einem der Ansprüche 1 bis 11,
**dadurch gekennzeichnet,**
**daß** die Kontaktbrücken (11, 11', 11") zumindest bereichsweise eine Beschichtung aus Silber oder Zinn aufweisen.

13. Kommutator einem der Ansprüche 1 bis 12,
**dadurch gekennzeichnet,**
**daß** die Leitersegmente (3, 3") an ihren radialen Innenseiten Vertiefungen (27) aufweisen, in welche die Fußabschnitte (21') der Kontaktbrücken (11', 11") eingreifen.

14. Kommutator nach einem der Ansprüche 1 bis 13,
**dadurch gekennzeichnet,**
**daß** er als Trommelkommutator mit einer zylindrischen Bürstenlauffläche (4) ausgeführt ist.

15. Kommutator nach Anspruch 14,
**dadurch gekennzeichnet,**
**daß** sich die Bürstenlauffläche (4) in axialer Richtung über die Entstöreinrichtung (9, 9') hinaus erstreckt, wobei die radiale Dicke der Leitersegmente (3) unter der Bürstenlauffläche (4) auch im Bereich der Entstöreinrichtung (9, 9') größer ist als 0,5 mm.

16. Kommutator nach Anspruch 14 oder Anspruch 15,
**dadurch gekennzeichnet,**
**daß** die Entstöreinrichtung (9, 9') an der den Anschlußelementen (7) für die Rotorwicklung gegenüberliegenden Stirnseite des Kommutators angeordnet ist.

17. Kommutator nach einem der Ansprüche 1 bis 13,
**dadurch gekennzeichnet,**
**daß** er als Plankommutator mit einer ebenen Bürstenlauffläche (4") ausgeführt ist, wobei die Entstöreinrichtung (9") an der der Bürstenlauffläche abgewandten Stirnseite des Kommutators angeordnet ist.

18. Verfahren zur Herstellung eines Kommutators nach Anspruch 1, umfassend die folgenden Schritte:
Herstellen eines den Trägerkörper (1, 1") und die Leitersegmente (3, 3") aufweisenden Kommutatorrohlings mit stirnseitig im Trägerkörper angeordneten Aufnahmen (14, 14', 14") für die Enstörelemente (10, 10', 10");
Herstellen einer Mehrzahl von Entstörelementen (10, 10', 10");
Herstellen einer der Anzahl der Entstöelemente entsprechenden Anzahl von Kontaktbrücken (11, 11', 11"), welche jeweils zwei zueinander nachgiebige Schenkel (20, 20') und einen Fußabschnitt (21, 21') aufweisen;
Einsetzen der Enstörelemente (10, 10', 10") in die Aufnahmen (14, 14', 14") des Trägerkörpers (1, 1");
Anbringen der Kontaktbrücken (11, 11', 11") dergestalt, daß sie jeweils zwei einander benachbarte Entstörelemente (10, 10', 10") und ein Leitersegment (3, 3") elektrisch leitend miteinander verbinden, indem sie im Bereich ihrer Schenkel (20, 20') mit den beiden zugeordneten Entstörelementen (10, 10', 10") und im Bereich ihres Fußabschnitts (21, 21') mit dem zugeordneten Leitersegment (3, 3") verlötet oder verklebt werden.

19. Verfahren nach Anspruch 18,
**dadurch gekennzeichnet,**
**daß** auf die Kontaktbrücken (11, 11', 11") vor deren Anbringung im Bereich ihrer späteren elektrisch leitenden Verbindungen mit den Entstörelementen (10, 10', 10") und den Leitersegmenten (3, 3") Lötmittel oder Klebstoff aufgetragen wird.

20. Verfahren nach Anspruch 18 oder Anspruch 19,
**dadurch gekennzeichnet,**
**daß** die Kontaktbrücken (11', 11") durch Ausstanzen aus einem ebenen Blechstreifen hergestellt werden.

21. Verfahren nach Anspruch 20,
**dadurch gekennzeichnet,**
**daß** die Konfiguration der Kontaktbrücken (11', 11") während des Ausstanzens ihrer Konfiguration in dem herzustellenden Kommutator entspricht, wobei die Kontaktbrücken (11', 11") nach ihrem Ausstanzen aus dem Blechstreifen wieder in diesen eingepreßt und gemeinsam duch Auspressen aus dem Blechstreifen an dem Kommutatorrohling montiert werden, nachdem die Entstörelemente (10', 10") in die Aufnahmen (14', 14") eingesetzt worden sind.

22. Verfahren nach Anspruch 21 und Anspruch 19,
**dadurch gekennzeichnet,**
**daß** das Lötmittel bzw. der Klebstoff auf die Kontaktbrücken (11, 11', 11") aufgetragen wird, nachdem diese wieder in den Blechstreifen eingepreßt wurden.

## Claims

1. A commutator for an electric machine, comprising a support member (1, 1") made from insulating moulding compound, a plurality of metal conductor segments (3, 3") arranged thereon in an evenly spaced manner around the commutator axis (2) with terminal elements arranged thereon for a rotor winding, and an interference-suppression device (9, 9', 9") to which the conductor segments (3, 3") are connected in an electrically conductive manner, the interference-suppression device (9, 9', 9") comprising a number of individual interference-suppression elements (10, 10', 10") arranged around the commutator axis (2) corresponding to the number of conductor segments (3, 3") and an equally large number of contact bridges (11, 11', 11"), each of which is connected to an associated conductor segment in an electrically conductive manner and connects two mutually adjacent interference-suppression elements (10, 10', 10") to one another and to the associated conductor segment in an electrically conductive manner, the contact bridges (11, 11', 11") in each case comprising two inwardly directed legs (20, 20') which are flexible relative to one another in the circumferential direction and are connected to the two associated interference-suppression elements in an electrically conductive manner, and one outwardly directed foot portion (21, 21') which is connected to the associated conductor segment in an electrically conductive manner, **characterised in that** the contact bridges (11, 11', 11") are soldered or adhesively bonded in the region of their legs (20, 20') to the associated interference-suppression elements (10, 10', 10") and in the region of their foot portions (21, 21', 21") to the associated conductor segments (3, 3").

2. The commutator according to Claim 1, **characterised in that** the interference-suppression elements (10, 10', 10") are constructed as parallelepiped multi-layer capacitors.

3. The commutator according to Claim 1 or Claim 2, **characterised in that** the interference-suppression elements (10, 10', 10") are arranged around the commutator axis (2) in a manner equally spaced-apart along the edges of a regular polygon.

4. The commutator according to one of Claims 1 to 3, **characterised in that** each interference-suppression element (10, 10', 10") is inserted into a seat (14, 14', 14") of the support member (1, 1") which defines the location of the relevant interference-suppression element in the radial direction and in the circumferential direction.

5. The commutator according to Claim 4, **characterised in that** the seats (14, 14', 14") are respectively bounded in the radially inward and circumferential direction by a ribbed ring (17, 17") and in the radially outward direction by moulding compound projections (18, 18") of the support member (1, 1").

6. The commutator according to Claim 4 or Claim 5, **characterised in that** the seats (14, 14', 14") for the interference-suppression elements (10, 10', 10") are connected to one another by installation spaces (24, 24', 24") for the contact bridges (11, 11', 11").

7. The commutator according to one of Claims 1 to 6, **characterised in that** the contact bridges (11) are each arranged spatially between two mutually adjacent interference-suppression elements (10) and are connected to the associated interference-suppression elements in the region of contact poles (13) on the front faces thereof.

8. The commutator according to Claim 7, **characterised in that** the contact bridges (11) are made of a bent metal strip.

9. The commutator according to one of Claims 1 to 6, **characterised in that** the contact bridges (11', 11") are arranged in a plane axially offset relative to the interference-suppression elements (10', 10") and are connected to the associated interference-suppression elements in the region of laterally arranged contact faces (25).

10. The commutator according to Claim 9, **characterised in that** the contact bridges (11', 11") are of substantially horse-shoe-shaped design and consist of a planar metal sheet, in particular by being punched out of a metal sheet.

11. The commutator according to one of Claims 1 to 10, **characterised in that** the contact bridges (11, 11', 11") consist of copper, brass or an alloy containing said metals.

12. The commutator according to one of Claims 1 to 11, **characterised in that** the contact bridges (11, 11', 11") have at least partially a coating made of silver or tin.

13. The commutator according to one of Claims 1 to 12, **characterised in that** the conductor segments (3, 3") comprise on their radial inner faces recesses (27) in which the foot portions (21') of the contact bridges (11', 11") engage.

14. The commutator according to one of Claims 1 to 13, **characterised in that** it is designed as a drum commutator with a cylindrical brush running surface (4).

15. The commutator according to Claim 14, **characterised in that** the brush running surface (4) extends in the axial direction beyond the interference-suppression device (9, 9'), the radial thickness of the conductor segments (3) under the brush running surface (4) being greater than 0.5 mm even in the region of the interference-suppression device (9, 9').

16. The commutator according to Claim 14 or Claim 15, **characterised in that** the interference-suppression device (9, 9') is arranged on the front face of the commutator opposite the terminal elements (7) for the rotor winding.

17. The commutator according to one of Claims 1 to 13, **characterised in that** it is designed as a flat commutator with a planar brush running surface (4"), the interference-suppression device (9") being arranged on the front face of the commutator remote from the brush running surface.

18. A method for producing a commutator according to Claim 1, comprising the following steps:
producing a commutator blank, comprising the support member (1, 1"), and the conductor segments (3, 3") and having seats (14, 14', 14") arranged on the front face in the support member to accommodate the interference-suppression elements (10, 10', 10");
producing a plurality of interference-suppression elements (10, 10', 10");
producing a number of contact bridges (11, 11', 11") corresponding to the number of interference-suppression elements, each of which comprises two legs (20, 20') which are flexible relative to one another and a foot portion (21, 21');
inserting the interference-suppression elements (10, 10', 10") into the seats (14, 14', 14") of the support member (1, 1");
attaching the contact bridges (11, 11', 11") in such a way that they each connect two mutually adjacent interference-suppression elements (10, 10', 10") and one conductor segment (3, 3") together in an electrically conductive manner, by being soldered or adhesively bonded in the region of their legs (20, 20') to the two associated interference-suppression elements (10, 10', 10") and in the region of their foot portion (21, 21') to the associated conductor segment (3, 3").

19. The method according to Claim 18, **characterised in that** solder or adhesive is applied onto the contact bridges (11, 11', 11") before they are attached in the region of their subsequent electrically conductive connections to the interference-suppression elements (10, 10', 10") and to the conductor segments (3, 3").

20. The method according to Claim 18 or Claim 19, **characterised in that** the contact bridges (11', 11") are produced by stamping from a planar sheet metal strip.

21. The method according to Claim 20, **characterised in that** the configuration of the contact bridges (11, 11") during the stamping corresponds to their configuration in the commutator to be produced, the contact bridges (11', 11") being pressed back into the sheet metal strip after they have been punched out, and being mounted together by being pressed out of the sheet metal strip on the commutator blank, after the interference-suppression elements (10', 10") have been inserted into the seats (14', 14").

22. The method according to Claim 21 and Claim 19, **characterised in that** the solder and/or adhesive is applied onto the contact bridges (11, 11', 11") after they have been pressed back into the sheet metal strips.

## Revendications

1. Commutateur pour une machine électrique, comprenant un corps support (1, 1") fabriqué à base de matière moulée isolante, une pluralité de segments conducteurs (3, 3") métalliques, disposés uniformément autour de l'axe de commutateur (2) avec des éléments de raccordement disposés dessus pour un enroulement rotorique et un dispositif antiparasite (9, 9', 9"), avec lequel les segments conducteurs (3, 3") sont reliés de façon électroconductrice, le dispositif antiparasite (9, 9', 9") comprenant un nombre, correspondant au nombre des segments conducteurs (3, 3"), d'éléments antiparasites (10, 10' , 10") disposés autour de l'axe de commutateur (2) et un nombre tout aussi grand de ponts de contact (11, 11', 11"), qui sont reliés à chaque fois de façon électroconductrice à un segment conducteur associé et relient de façon électroconductrice deux éléments antiparasites (10, 10', 10") voisins l'un de l'autre et avec le segment conducteur associé, les ponts de contact (11, 11', 11") présentant à chaque fois deux branches (20, 20') dirigées vers l'entrée, souples l'une par rapport à l'autre dans le sens périphérique, reliées de façon électroconductrice aux deux éléments antiparasites attribués et une partie de base (21, 21') dirigée vers l'extérieur et reliée de façon électroconductrice au segment de conducteur attribué,
**caractérisé en ce que**
les ponts de contact (11, 11', 11") sont brasés ou collés dans la zone de leurs branches (20, 20') avec les éléments antiparasites (10, 10', 10") attribués et dans la zone de leurs parties de base (21, 21', 21") avec les segments conducteurs (3, 3") attribués.

2. Commutateur selon la revendication 1,
**caractérisé en ce que**
les éléments antiparasites (10, 10', 10") sont réalisés sous forme de condensateurs multicouche en forme de parallélépipède.

3. Commutateur selon la revendication 1 ou la revendication 2,
**caractérisé en ce que**
les éléments antiparasites (10, 10', 10") sont disposés, espacés de façon identique, le long des arêtes d'un polygone équilatéral autour de l'axe de commutateur (2).

4. Commutateur selon l'une quelconque des revendications 1 à 3,
**caractérisé en ce que**
chaque élément antiparasite (10, 10', 10") est inséré dans un logement (14, 14', 14") du corps support (1, 1"), qui définit la position de l'élément antiparasite concerné dans la direction radiale et dans le sens périphérique.

5. Commutateur selon la revendication 4,
**caractérisé en ce que**
les logements (14, 14', 14") sont délimités radialement à l'intérieur et dans le sens périphérique à chaque fois par une bague nervurée (17, 17") et radialement à l'extérieur par des saillies en matière moulée (18, 18") du corps support (1, 1").

6. Commutateur selon la revendication 4 ou la revendication 5,
**caractérisé en ce que**
les logements (14, 14', 14") pour les éléments antiparasites (10, 10', 10") sont reliés les uns aux autres au moyen d'espaces de montage (24, 24', 24") pour les ponts de contact (11, 11', 11").

7. Commutateur selon l'une quelconque des revendications 1 à 6,
**caractérisé en ce que**
les ponts de contact (11) sont disposés à chaque fois dans l'espace entre deux éléments antiparasites (10) voisins l'un de l'autre et sont reliés aux éléments antiparasites attribués dans la zone de pôles de contact (13) côté avant.

8. Commutateur selon la revendication 7,
**caractérisé en ce que**
les ponts de contact (11) sont à base d'une bande métallique pliée.

9. Commutateur selon l'une quelconque des revendications 1 à 6,
**caractérisé en ce que**
les ponts de contact (11', 11") sont disposés dans un plan décalé axialement par rapport aux éléments antiparasites (10', 10") et sont reliés aux éléments antiparasites attribués dans la zone de surfaces de contact (25) disposées sur le côté.

10. Commutateur selon la revendication 9,
**caractérisé en ce que**
les ponts de contact (11', 11") sont réalisés essentiellement sous forme de fer à cheval et sont à base d'un matériau plat métallique plan, en particulier qu'ils sont découpés dans une tôle.

11. Commutateur selon l'une quelconque des revendications 1 à 10,
**caractérisé en ce que**
les ponts de contact (11, 11', 11") sont à base de cuivre, de laiton ou d'un alliage contenant ces métaux.

12. Commutateur selon l'une quelconque des revendications 1 à 11,
**caractérisé en ce que**
les ponts de contact (11, 11', 11") présentent au moins par endroits un revêtement à base d'argent ou d'étain.

13. Commutateur selon l'une quelconque des revendications 1 à 12,
**caractérisé en ce que**
les segments conducteurs (3, 3") présentent sur leurs côtés intérieurs radiaux des cavités (27) dans lesquelles s'engagent les parties de base (21') des ponts de contact (11', 11").

14. Commutateur selon l'une quelconque des revendications 1 à 13,
**caractérisé en ce**
**qu'**il est réalisé sous forme de commutateur à tambour avec une surface de glissement de brosse (4) cylindrique.

15. Commutateur selon la revendication 14,
**caractérisé en ce que**
la surface de glissement de brosse (4) s'étend dans le sens axial au-delà du dispositif antiparasite (9, 9'), l'épaisseur radiale des segments conducteurs (3) au-dessous de la surface de glissement de brosse (4) étant supérieure à 0,5 mm également dans la zone du dispositif antiparasite (9, 9').

16. Commutateur selon la revendication 14 ou la revendication 15,
**caractérisé en ce que**
le dispositif antiparasite (9, 9') est disposé sur le côté avant du commutateur qui fait face aux éléments de raccordement (7) pour l'enroulement rotorique.

17. Commutateur selon l'une quelconque des revendications 1 à 13,
**caractérisé en ce que**
il est réalisé sous la forme d'un commutateur plan avec une surface de glissement de brosse (4") plane, le dispositif antiparasite (9") étant disposé sur le côté avant, opposé à la surface de glissement de brosse, du commutateur.

18. Procédé pour fabriquer un commutateur selon la revendication 1, comprenant les étapes suivantes:
fabrication d'une ébauche de commutateur présentant le corps support (1, 1") et les segments conducteurs (3, 3") avec des logements (14, 14', 14") disposés côté avant dans le corps support pour les éléments antiparasites (10, 10', 10");
fabrication d'une pluralité d'éléments antiparasites (10, 10', 10");
fabrication d'un nombre, correspondant au nombre des éléments antiparasites, de ponts de contact (11, 11', 11"), qui présentent chacun deux branches (20, 20') souples l'une par rapport à l'autre et une partie de base (21, 21');
insertion des éléments antiparasites (10, 10', 10") dans les logements (14, 14', 14") du corps support (1, 1");
placement des ponts de contact (11, 11', 11") de telle sorte qu'ils relient de façon électroconductrice les uns aux autres à chaque fois deux éléments antiparasites (10, 10', 10") voisins l'un de l'autre et un segment conducteur (3, 3"), par le fait qu'ils sont brasés ou collés dans la zone de leurs branches (20, 20') avec les deux éléments antiparasites (10, 10', 10") associés et dans la zone de leur partie de base (21, 21') avec le segment conducteur (3, 3") attribué.

19. Procédé selon la revendication 18,
**caractérisé en ce que**
de l'agent de brasage ou de la colle est appliqué sur les ponts de contact (11, 11', 11") avant leur placement dans la zone de leurs futures liaisons électroconductrices avec les éléments antiparasites (10, 10', 10") et les segments conducteurs (3, 3").

20. Procédé selon la revendication 18 ou la revendication 19,
**caractérisé en ce que**
les ponts de contact (11', 11") sont fabriqués par découpage dans une bande de tôle plane.

21. Procédé selon la revendication 20,
**caractérisé en ce que**
la configuration des ponts de contact (11', 11") correspond pendant le découpage à leur configuration dans le commutateur à fabriquer, les ponts de contact (11', 11") étant enfoncés après leur découpage dans la bande de tôle à nouveau dans celle-ci et étant montés ensemble, par sortie par pression de la bande de tôle sur l'ébauche de commutateur, après que les éléments antiparasites (10', 10") aient été insérés dans les logements (14', 14").

22. Procédé selon la revendication 21 et la revendication 19,
**caractérisé en ce que**
l'agent de brasage ou la colle est appliqué sur les ponts de contact (11, 11', 11") une fois que ceux-ci ont été enfoncés à nouveau dans la bande de tôle.
